(19)

Europäisches
Patentamt
European
Patent Office
Office européen
des brevets

(11) **EP 2 284 565 A1**

(12) **EUROPEAN PATENT APPLICATION**

(43) Date of publication:
**16.02.2011 Bulletin 2011/07**

(51) Int Cl.:
*G01S 7/35* $^{(2006.01)}$      *G01S 13/34* $^{(2006.01)}$

(21) Application number: **10251352.0**

(22) Date of filing: **29.07.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(30) Priority: **12.08.2009 GB 0914118**<br><br>(71) Applicant: **Thales Holdings UK Plc**<br>**Addlestone, Surrey KT15 2NX (GB)** | (72) Inventor: **Stove, Andrew Gerald**<br>**Crawley, West Sussex RH10 9PZ (GB)**<br><br>(74) Representative: **Round, Edward Mark**<br>**Marks & Clerk LLP**<br>**90 Long Acre**<br>**London**<br>**WC2E 9RA (GB)** |

(54) **Continous wave radar**

(57)     A continuous wave frequency shift-keyed radar apparatus comprising means for changing the frequency of the transmitted continuous wave periodically and in a pseudo-random sequence, means for mixing the received wave with the transmitted wave or a delayed version thereof to produce a beat signal, means for sampling the beat signal, in respect of each period of simultaneous transmission and reception at the same frequency, means for reordering successive segments of the sampled beat signal to put them in sequential frequency order, and means for transforming the reordered segments to provide an output signal in the range domain.

Fig. 4

EP 2 284 565 A1

**Description**

This invention relates to continuous wave radar apparatus and methods, and it is particularly, although not exclusively, useful for radar systems in which it is necessary to detect targets only over a limited range swath. One application of the invention is in the terminal guidance of seekers, since the invention can be used with a very large bandwidth giving it high range resolution.

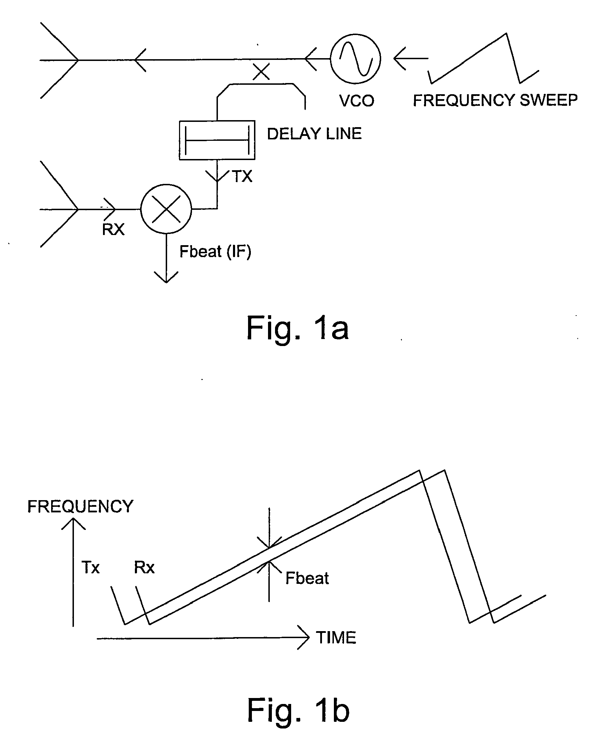

Radar systems with FM (frequency modulated) ranging are well known. Typically, FM ranging involves changing the transmitter frequency at a constant rate, so that the frequency against time appears as a series of ramps of equal slope, the length of the slope generally being many times the maximum round trip transit time. Such radars using modulated continuous transmissions are useful for making effective use of solid state transmitters and are hard to intercept. One such radar system is shown in Figure 1A of the accompanying drawings, the transmitted wave form being shown in Figure 1B.

An additional advantage of conventional FMCW systems is that the signal processing bandwidth can be reduced to a fraction of that normally required in order to provide a given range resolution, by the device of processing signals only up to a desired maximum range.

The purpose of the present invention is to make a radar that is more difficult to detect whilst minimising the processing rate for radar signals, and maintaining a sufficiently useful bandwidth.

The invention provides a continuous wave frequency shift-keyed radar apparatus comprising means for changing the frequency of the transmitted continuous wave periodically and in a pseudo-random sequence, means for mixing the received wave with the transmitted wave or a delayed version thereof to produce a beat signal, means for sampling the beat signal, in respect of each period of simultaneous transmission and reception at the same frequency, means for reordering successive segments of the sampled beat signal to put them in sequential frequency order, and means for transforming the reordered segments to provide an output signal in the range domain.

The invention also provides a continuous wave frequency shift-keyed radar method comprising changing the frequency of a transmitted continuous wave periodically and in a pseudo-random sequence, mixing the received wave with the transmitted wave or a delayed version thereof to produce a beat signal, sampling the beat signal in respect of each period of simultaneous transmission and reception at the same frequency, reordering successive segments of the sampled beat signal to put them in sequential frequency order, and transforming the reordered segments to provide an output signal in the range domain.

Whilst the use of pseudo-random Frequency Shift Keyed (FSK) sequences to modulate radar signals is well known, the invention can process these efficiently with an analogue-to-digital converter with a much lower bandwidth than that of the transmitted signal.

By exploiting pseudo-random modulations of the transmission frequency, the invention makes the radar signals more difficult to detect than those of other modulated continuous wave systems. The radar apparatus of the invention works well only over a limited range swath, which may typically be one kilometre wide, which is limited because of the need for an overlap in time between the segments of transmitted and received signals at the same frequency, to produce a relatively low frequency beat signal which is sampled.

An advantage of FMCW radars is that a strong return at zero range from direct leakage between the transmitter and the receiver can be eliminated by AC coupling the antenna to the receiver. This is also possible with the present invention.

The present invention achieves the desirable aim of reduced processing rate for the received signals returned from targets, and the transforming means is preferably an FFT, fast Fourier transform, processor.

The segments are preferably of equal duration.

The radar apparatus preferably comprises:

a memory arranged to store the sequence of indexes representative of transmission frequencies, a timing clock, a transmission signal generator responsive to the timing clock and to the memory to generate a continuous wave whose frequency is shift-keyed according to the indexes read from the memory, and means responsive to the timing clock and to the memory to sample and hold the beat signal segments and to reorder them in sequential frequency. The means for sampling and holding the beat signal segments may typically be a shift register whose contents can be reordered by a control signal derived from the memory which records the pseudo-random sequence of frequencies and is accessed by the signal from the timing clock.

Preferably, the mixing means comprises:

a delay line for delaying the transmitted continuous wave and a frequency mixer to mix it with the received continuous wave.

In order that the invention may be better understood, a preferred embodiment will now be described, by way of example only, with reference to the accompanying schematic drawings, in which;

Figure 1A is a diagram of a conventional FMCW radar apparatus;
Figure 1B is a graph of frequency against time for the apparatus of Figure 1A:
Figures 2A to 2D are graphs showing the operation of a CW frequency shift-keyed radar system embodying the present invention;
Figures 3A to 3D are graphs corresponding to those of Figures 2A to 2D for an increased range to target;
Figure 4 is a diagram of a CW frequency shift-keyed radar system embodying the present invention; and Figure 5 illustrates examples of waveforms of signals in parts of the system of Figure 4.

With reference to Figures 1A and 1B, a conventional linear frequency modulated continuous wave, FMCW, radar signal can be processed efficiently using a homodyne receiver, where the received signal is mixed with a copy of the transmitted signal and the difference frequency components, i.e. the beat signal components, are proportional to the power and amplitudes of the returns from different ranges. A voltage controlled oscillator, VCO, is modulated by a linear ramp voltage signal to produce a frequency swept signal TX as shown in Figure 1B. Most of this signal TX is transmitted, but part of it is used to provide the local oscillator signal to the receiver mixer, usually through a delay line as shown. The received signal RX is then mixed with the sample of the transmitted signal to produce a beat frequency $F_{beat}$. As is apparent from the timing diagram in Figure 1B, when the signal is received from a signal target the output of the mixer is a beat frequency which is proportional to the time delay between the transmitted and received signals, i.e. to the range to the target.

The delay line in the path feeding the local oscillator signal to the mixer, as discussed in EP0138253B, can be used to minimise the detection of FM noise on any signals leaking directly between the transmitter and the receiver.

In many such systems the transmit and receive paths are connected to a common antenna through a circulator, although separate antennas are shown schematically in Figure 1A.

If there is more than one target present, then each target produces its own signal at the mixer output with a frequency proportional to its range. The total spectrum of frequencies thus represents the ranges and received powers corresponding to the variety of targets present. The spectrum produced in this way is analysed using a fast fourier transform, FFT, processor to provide a series of signals representative of the strength of the reflectors in each range bin. This output signal can be used in the generation of a screen display of the targets, or to control the guidance or fusing systems of a missile, as is known.

The principle behind the present invention will now be described. The present invention uses more noise-like signals than in FMCW. The invention provides a way of doing this using frequency shift-keyed signals, where the signal stays at a fixed frequency for a short period of time, or a "chip", and then jumps to another, pseudo-randomly chosen, frequency.

Relationship Between Homodyne FMCW Processor and the Matched Filter

The problem of describing how the 'homodyne' processing of FMCW radars can be seen to act as a proper matched filter will first be explained.

As is well known, in the frequency domain, a matched filter is accomplished by multiplying the received spectrum by the complex conjugate of the transmitted spectrum, and the full process can be implemented by

a) converting the signal into the frequency domain, using a Fourier Transform, which may conveniently be carried out using the well-known Fast Fourier Transform (FFT) algorithm.

b) multiplying the received signal by the complex conjugate of the transmitted signal and

c) performing an inverse Fourier transform to return to the range domain.

The homodyne system typically uses a forward FFT to recover the range information from the frequency spectrum. Apart from the irrelevant factors of the absolute amplitudes and the absolute phase in each frequency bin, the difference between the FFT and the inverse FFT can be ignored.

Similarly, in the mixing process, which generates sum and difference products, the difference frequency in this case is equivalent to the multiplication by the complex conjugate, (b). This can be seen when it is considered that the sum and difference terms for the product of $\exp j(\omega_1 t+\phi_1)$ and $\exp(j\omega_2 t+\phi_2)$ are $\exp[j((\omega_1+\phi_1)+(j\omega_2 t+\phi_2))]$ and $\exp[j((\omega_1 t+\phi_1)-(j\omega_2 t+\phi_2))]$ so that when $\omega_1=\omega_2$ and $\phi_1=\phi_2$, the difference signal is equivalent to a multiplication of the signal by its complex conjugate.

Hence in the homodyne receiver, one has the last two stages of the matched filter. The question of what has happened to the first stage, the initial FFT, is avoided by the device that, to a first approximation, the energy associated with a particular transmitted frequency is confined to a particular point in time on the transmitted frequency ramp. That is, if the ramp is

$$a = \sin(\alpha t + \beta t^2 + \phi)$$

then the instantaneous frequency is

$$f = \alpha/(2\pi) + \beta t/\pi$$

so the energy associated with a frequency f occurs at around the time $(\pi/\beta)*[f - \alpha/(2\pi)]$. This means that the time-sequence of the signal after the multiplication by the reference can be taken as being equivalent to the sequence of Fourier components, so avoiding the first Fourier transform.

Without going into a complete mathematical analysis, it can be seen that, since FMCW works so cleanly, in this case all the higher-order effects must cancel out and the scheme works perfectly, until the time of flight becomes comparable with the length of the ramp.

Two things follow from this. The first is that for any waveform which is being processed using Fourier-Transform based correlation, then after step (b) above, the multiplication by the complex conjugate of the transmitted signal, what remains is a set of Fourier components which can be visualized as a series of sine waves, each component of which represents the return from a particular range. For example if the waveform has a much greater range swathe than is needed, it might be easier to low-pass filter the frequency-domain waveform (merge together frequency components) and perform a shorter FFT to recover only those components of interest, than to FFT the whole spectrum. Averaging adjacent components reduces the maximum indicated range, but since the span of the spectrum remains the same, the range resolution of the system is unchanged.

Extension to Pseudo-Random Waveforms

It is well known, if this homodyne process is tried with other waveforms, in general the signals will only 'line up' for the period for which the signal remains unchanged. For most waveforms, such as pure noise or Phase-Shift Keyed waveforms, this is for the reciprocal of the signal bandwidth, however, the other extension of the analysis of the FMCW case, and the heart of the invention, is that one can obtain some correlation of the signal over longer time periods by using a Frequency-Shift Keyed (FSK) waveform.

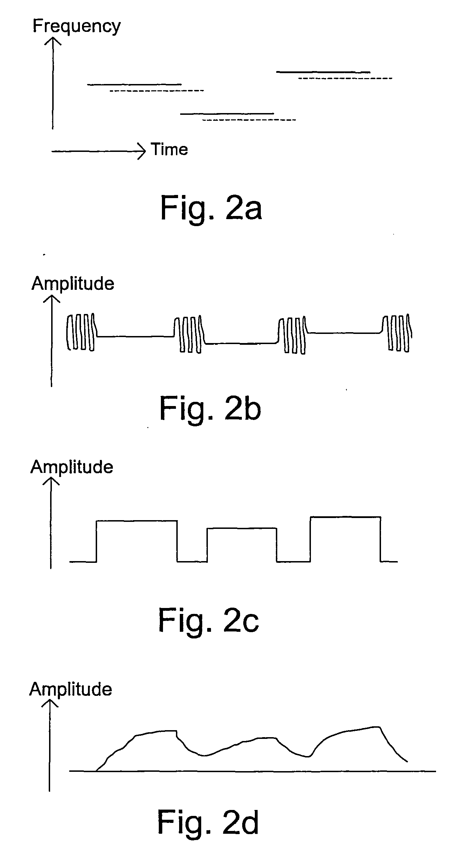

An example is a waveform with a chip duration of $10\mu s$, and a bandwidth of 10MHz. The duration of $10\mu s$ means that an individual 'chip' will occupy a bandwidth of about 100kHz. It will therefore take about 100 samples to 'fill' the 10MHz spectrum substantially uniformly, so the whole waveform will be transmitted in about a millisecond. Each constant-frequency 'chip' is represented by one of the straight lines in the frequency/time graph in figure 2. The solid lines represent the pattern of the transmitted signal and the dotted lines represent the received signal, which is a delayed version of the same pattern.

For example, if the target range is about 800m, i.e. there is a time delay of $5\mu s$ to and from the target, then using a homodyne receiver, for the second half of each 'chip' the transmitted and received signals will line up. Hence half the energy will be recovered as a low-frequency signal and the rest 'lost' as broad-band noise. For zero range, all the power will be recovered, and at ranges greater or equal to the chip rate nothing will be recovered.

The three compromises which must be accepted to make the system work are:

a) the reduced efficiency as the time of flight to the target and back approaches the chip period,

b) some spectral inefficiency, from an LPI (low probability of intercept) point of view, due to the fact the signal is pure FM, i.e. the signal in one sideband can be deduced from that in the other and

c) a modest increase in detectability due to the fact that the signal is instantaneously narrow band, albeit only for $10\mu s$.

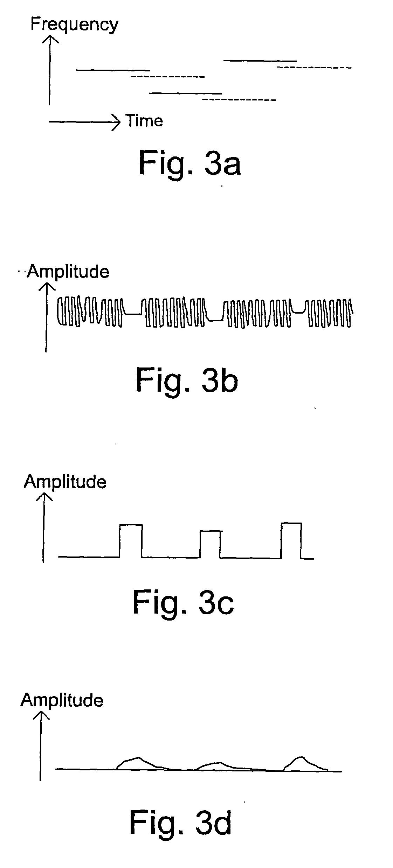

Figure 3 shows how the concept breaks down as the range increases. As the range increases the overlap between transmitted and received signals decreases and the energy in the low-frequency signal is reduced. Note that if it desired to detect targets over a limited range swathe which does not start at zero, then, if a digitally synthesised signal is used, the local oscillator can be offset in time with respect to the transmitted signal.

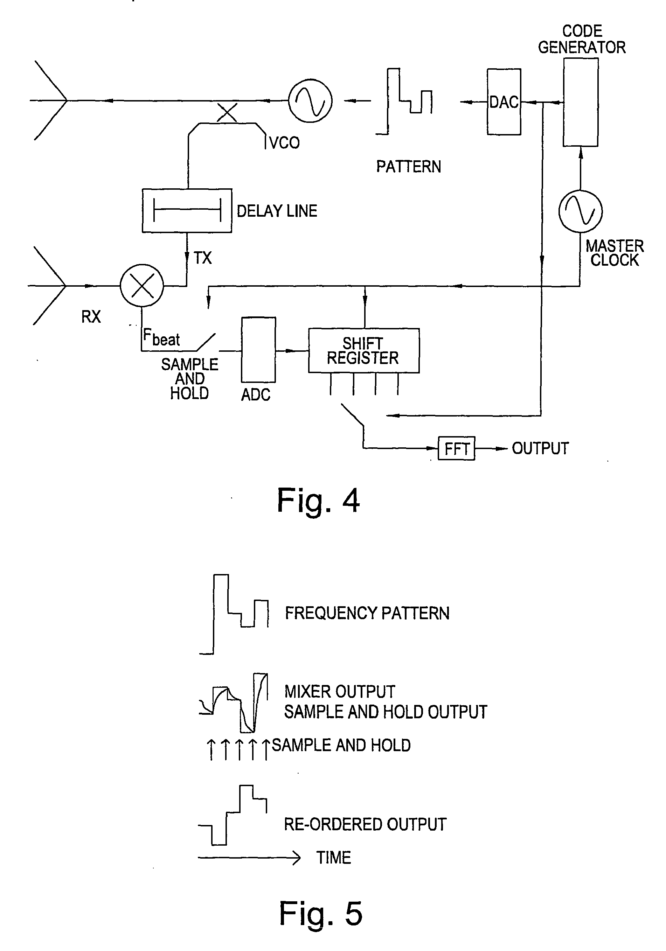

Figure 4 illustrates schematically a radar apparatus embodying the present invention, for processing signals as described above with reference to Figures 2 and 3.

The hardware architecture is the same as shown in figure 1, except that the transmitted signal consists of short sections at fixed frequency followed by a jump to another, randomly-chosen frequency. This pattern is illustrated by the solid black lines in the frequency-time plot in Figures 2a and 3a. The received frequencies are shown by the dotted line. This is offset in time due to the time of flight to the target and back. This pattern is also shown offset in frequency, for clarity. This might occur in practice due to the Doppler shift from a moving target, but this is not significant to this description. Figures 2b and 3b show the output of the homodyne mixer. When the transmit and received frequencies are different a high beat frequency will be produced, but when they are the same a low-frequency signal will be produced. The IF will look like the curves of Figs 2c and 3c, with the high frequency signals having been removed. Figures 2d and 3d indicate how the signals appear at the input to the ADC.

The signal level in Figs 2c and 3c will vary from chip to chip due to the change in phase due to the change in carrier frequency. The phase of the beat signal is exp (-2jkr) where r is the range and k is the wave number, $2\pi f/c$, where f is the carrier frequency and c is the velocity of propagation (for a radar in the air, the speed of light in air). This is what produces the range resolution information. When the digitised samples from each chip are rearranged in monotonic order of carrier frequency, this variation of amplitude with frequency becomes a sinusoid. When signals from multiple returns are present, the re-arranged chips constitute a sum of sinusoids, as in the FMCW case.

With reference to Figure 4, a master clock produces a pulsed signal output which is used for sampling and holding the beat frequency $F_{beat}$. Each time a CODE GENERATOR is clocked by the MASTER CLOCK it outputs a code representing (i) the next frequency to be transmitted and (ii) the next received sample to be sent into an FFT processor.

The code for the transmitted frequency is passed to a Digital-to-Analogue Converter (DAC) to drive the voltage controlled oscillator (VCO). The drive voltage is sketched in the figure and labelled 'Frequency Pattern' to indicate how it differs from the smooth ramp used by the FMCW radar. This generates the transmission signal which is frequency shift-keyed at the frequency of the master clock.

The code can be generated by the well-known technique of using a shift register with feedback, as explained for example at http://en.wikipedia.org/wiki/Linear_feedback_shift_register:

> A linear feedback shift register (LFSR) is a shift register whose input bit is a linear function of its previous state. The only linear functions of single bits are xor and inverse-xor; thus it is a shift register whose input bit is driven by the exclusive-or (xor) of some bits of the overall shift register value. The initial value of the LFSR is called the seed, and because the operation of the register is deterministic, the stream of values produced by the register is completely determined by its current (or previous) state. Likewise, because the register has a finite number of possible states, it must eventually enter a repeating cycle. However, an LFSR with a well-chosen feedback function can produce a sequence of bits which appears random and which has a very long cycle.

The complementary decoding sequence is also generated from a SHIFT REGISTER, in this example. The codes could alternatively be read out of a computer memory. The only constraint on the code is that all the frequency components must appear once and only once, in the time interval which corresponds to one set of data entering the FFT (which is analogous to the sweep period in the FMCW case). The code may repeat again, which can allow better Doppler processing, or may change, which makes its interception somewhat harder.

The frequency $F_{beat}$ is fed through an analogue-to-digital converter ADC to the shift register. The shift register stores digital representations of the amplitude of the beat frequency. Sets of adjacent elements of the shift register, which store the beat frequency values corresponding to one 'chip' i.e. one transmission at constant frequency, are stored adjacent to other sets of elements for different chip frequencies. Under the control of the master clock signal, the contents of the sets of elements in the shift register are accessed in a reordered sequence in monotonically increasing order of the corresponding transmitter frequencies. This output from the shift register in sequential order of transmitted frequency is processed in the FFT processor to generate an output signal in the range domain which is then used to generate the usual display of radar targets.

Since the signals from some of the frequency components must be 'read out' earlier in the sequence than those frequencies are transmitted, the shift register following the ADC must be long enough to hold the data from two repetitions of the code.

By way of example, the lowest frequency might be 9GHz and each step 100kHz, with a total of 1024 steps to cover a total bandwidth up to just over 9.1GHz. The bandwidth might equally be up to 1GHz, but this example gives more typical values. This example uses 1024 since an FFT has a number of samples which is a power of 2.

It will be appreciated that the reordering of the frequencies can be achieved in many different ways. The generation of pseudorandom sequences of numbers, and the decoding of those sequences, is well known and need to be repeated here. To illustrate the frequency reordering algebraically, let the frequency steps = $f_0 + i\,\Delta f$. Then at time $t_j$, the transmit frequency is = $f_0 + k\,\Delta_f$ and $k \neq j$ is necessary to make the signal pseudo-random. The re-ordering of frequencies means taking sample '$j$' at time '$k$'; finding which sample was received when frequency $f_0 + j\,\Delta f$ was being transmitted, and reading that sample back out at time $j$.

The decoding of the pseudorandom sequence of the sets of elements in the shift register is performed by using the output of the CODE GENERATOR.

The frequency of the beat signal $F_{beat}$ is typically of the order of 100kHz. The number of samples taken for each chip may be one or more than one, so that the number of elements of the shift register for each set correspondingly can be one or more than one.

After reordering the samples in the shift register, the signals represent sine waves oscillating faster the greater the range, as for FMCW.

A further minor disadvantage is that the waveform will no longer be Doppler-tolerant, because the reordering will break up the regular sine waves caused by the Doppler 'beats', unless the Doppler is known and can be compensated for, e.g. for a closing seeker. However, a major advantage is that the zero-range return will come back at DC and so can be removed by high-pass filtering of the signal.

A further advantage relates to the behaviour with respect to transmitter noise sidebands. In continuous wave radars the received signal must compete with the noise sidebands of the transmitted signal. The scheme described restores the relationship by which the weaker signals at longer range are represented by higher frequencies in the receiver and thus compete only with the noise sidebands which are further from the carrier, and are thus weaker because they are further removed from the 1/*f* noise components.

A working example of the invention has been used in a (pseudo-) randomly modulated radar with 10MHz bandwidth but an ADC sampling rate of 100kHz.

The present invention can be used to modify an existing FMCW radar, e.g. by retrofitting by changing the modulator, modifying the receiver amplifier to give it a flat gain-frequency response, and providing the apparatus, such as shift register and tables, for reordering the samples between the ADC and the FFT.

The invention can be combined with other well-known architectures for FMCW or pseudo-noise radars, for example the pseudo-random RF signal could also be synthesized digitally, either at the transmitted frequency or at some convenient lower frequency and then converted up to the transmitted frequency using a fixed frequency oscillator.

**Claims**

1. A continuous wave frequency shift-keyed radar apparatus comprising means for changing the frequency of the transmitted continuous wave periodically and in a pseudo-random sequence, means for mixing the received wave with the transmitted wave or a delayed version thereof to produce a beat signal, means for sampling the beat signal, in respect of each period of simultaneous transmission and reception at the same frequency, means for reordering successive segments of the sampled beat signal to put them in sequential frequency order, and means for transforming the reordered segments to provide an output signal in the range domain.

2. Radar apparatus according to Claim 1, in which the transforming means comprises an FFT, fast Fourier transform, processor.

3. Radar apparatus according to Claim 1 or Claim 2, in which the segments are of equal duration.

4. Radar apparatus according to any preceding claim, comprising a memory arranged to store the sequence of indexes representative of transmission frequencies, a timing clock, a transmission signal generator responsive to the timing clock and to the memory to generate a continuous wave whose frequency is shift-keyed according to the indexes read from the memory, and means responsive to the timing clock and to the memory to sample and hold the beat signal segments and to reorder them in sequential frequency.

5. Radar apparatus according to any preceding claim, in which the mixing means comprises a delay line for delaying the transmitted continuous wave and a frequency mixer to mix it with the received continuous wave.

6. Radar apparatus according to any preceding claim, comprising a receiver AC coupled to the mixing means, to eliminate direct leakage between transmitted and received signals at zero range.

7. A continuous wave frequency shift-keyed radar method comprising changing the frequency of a transmitted continuous wave periodically and in a pseudo-random sequence, mixing the received wave with the transmitted wave or a delayed version thereof to produce a beat signal, sampling the beat signal in respect of each period of simultaneous transmission and reception at the same frequency, reordering successive segments of the sampled beat signal to put them in sequential frequency order, and transforming the reordered segments to provide an output signal in the range domain.

VCO   FREQUENCY SWEEP

DELAY LINE

TX

RX

Fbeat (IF)

# Fig. 1a

FREQUENCY

Tx   Rx

Fbeat

TIME

# Fig. 1b

Frequency

Time

## Fig. 2a

Amplitude

## Fig. 2b

Amplitude

## Fig. 2c

Amplitude

## Fig. 2d

Frequency

Time

Fig. 3a

Amplitude

Fig. 3b

Amplitude

Fig. 3c

Amplitude

Fig. 3d

Fig. 4

FREQUENCY PATTERN

MIXER OUTPUT
SAMPLE AND HOLD OUTPUT

↑ ↑ ↑ ↑ ↑ SAMPLE AND HOLD

RE-ORDERED OUTPUT

TIME

Fig. 5

**Europäisches Patentamt**
**European Patent Office**
**Office européen des brevets**

## EUROPEAN SEARCH REPORT

Application Number

EP 10 25 1352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 028 548 A (FARMER MICHAEL E [US]) 22 February 2000 (2000-02-22) | 1-4,7 | INV. G01S7/35 |
| Y | * abstract; claim 1 * * column 4, line 46 - line 63 * * column 7, line 24 - line 43 * ----- | 5,6 | G01S13/34 |
| X | US 2009/085796 A1 (KURODA HIROSHI [JP] ET AL) 2 April 2009 (2009-04-02) * abstract; figures 1,6,7 * * paragraphs [0018] - [0022], [0057], [0072] - [0076] * ----- | 1-4,7 | |
| Y,D | EP 0 138 253 B1 (PHILIPS ELECTRONIC ASSOCIATED [GB]; PHILIPS NV [NL]) 21 August 1991 (1991-08-21) * column 2, line 26 - column 3, line 10; figures * ----- | 5 | |
| Y | US 4 806 935 A (FOSKET TIMOTHY G [US] ET AL) 21 February 1989 (1989-02-21) * abstract * * column 11, line 54 - line 65 * ----- | 6 | TECHNICAL FIELDS SEARCHED (IPC) G01S |

The present search report has been drawn up for all claims

| Place of search | Date of completion of the search | Examiner |
|---|---|---|
| The Hague | 12 November 2010 | Roost, Joseph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 284 565 A1**

**ANNEX TO THE EUROPEAN SEARCH REPORT
ON EUROPEAN PATENT APPLICATION NO.**                    EP 10 25 1352

This annex lists the patent family members relating to the patent documents cited in  the above-mentioned European search report.
The members are as contained in the European Patent Office EDP file on
The European Patent Office is in no way liable for these particulars which are merely given for the purpose of information.

12-11-2010

| Patent document cited in search report | | Publication date | Patent family member(s) | | Publication date |
|---|---|---|---|---|---|
| US 6028548 | A | 22-02-2000 | CA | 2275528 A1 | 23-07-1998 |
| | | | EP | 0953156 A1 | 03-11-1999 |
| | | | JP | 2002513468 T | 08-05-2002 |
| | | | US | 5923280 A | 13-07-1999 |
| | | | WO | 9832029 A1 | 23-07-1998 |
| US 2009085796 | A1 | 02-04-2009 | EP | 2026098 A1 | 18-02-2009 |
| | | | JP | 2009042061 A | 26-02-2009 |
| EP 0138253 | B1 | 21-08-1991 | DE | 3484949 D1 | 26-09-1991 |
| | | | EP | 0138253 A2 | 24-04-1985 |
| | | | GB | 2147473 A | 09-05-1985 |
| | | | JP | 60100777 A | 04-06-1985 |
| US 4806935 | A | 21-02-1989 | AU | 2790689 A | 17-04-1989 |
| | | | CA | 1290429 C | 08-10-1991 |
| | | | DE | 3850671 D1 | 18-08-1994 |
| | | | DE | 3850671 T2 | 02-03-1995 |
| | | | EP | 0395682 A1 | 07-11-1990 |
| | | | IL | 86704 A | 15-12-1991 |
| | | | JP | 2584506 B2 | 26-02-1997 |
| | | | JP | 3501648 T | 11-04-1991 |
| | | | WO | 8902605 A1 | 23-03-1989 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0138253 B